# EUROPEAN PATENT APPLICATION

(11) **EP 4 852 245 A1**
(43) Date of publication of application: **09.12.2026**
(21) Application number: 26182778.6
(22) Date of filing: 03.06.2026
(51) Int. Cl.: H02G 1/10, G01C 13/00, G01F 1/32, G01F 1/66, G01H 9/00, G01P 5/26, G05D 1/606, B63B 35/04, G01V 99/00

(54) **REAL TIME UNDERWATER CABLE POSITIONING SYSTEM AND METHOD**

(30) Priority: 03.06.2025 US 202563816954 P; 27.05.2026 US 202619688664
(71) Applicant: Google LLC, Mountain View, CA 94043 (US)
(72) Inventor: BHATTACHARYA, Shirshendu, 117371 Singapore (SG); CANTONO, Mattia, 41004 Sevilla (ES); MOLLANO, Maurizio, Mountain View, 94043 (US)
(74) Representative: Betten & Resch

(57) **Abstract**

A system for underwater cable placement monitors water column conditions in real-time. The system includes a computer processor that generates a 3D model of the cable vessel environment, including a spatial representation of the cable being laid. The processor receives inputs representing a selected cable route and properties of the cable vessel. A distributed sensor arrangement detects conditions in the water column, updating parameters of the 3D model. Updated parameters are provided to the processor to refine the 3D model based on detected conditions. The system and related method are for placement of underwater cables during deployment to ensure proper positioning.

## Description

### CROSS-REFERENCE TO RELATED APPLICATIONS

This application claims the benefit of the filing date of United States Provisional Patent Application No. 63/816,954 filed June 3, 2025, the disclosure of which is hereby incorporated herein by reference.

### BACKGROUND

The placement of submarine cables along a seabed involves carefully managing the cable during deployment from a surface vessel. These cables, often spanning vast distances between continents, are critical infrastructure for global communication networks. Ensuring the longevity and reliability of these cables requires precise positioning on the seabed, minimizing stress and potential damage. The process typically involves a vessel releasing the cable, which then descends through the water column to its designated location. However, the underwater environment presents significant challenges for controlled cable placement.

Existing methodologies for determining water current conditions during cable installation have limitations. One common technique relies on Acoustic Doppler Current Profilers (ADCPs) mounted on the cable-laying vessel. ADCPs emit sound beams and measure the Doppler shift of the returning echoes from particles suspended in the water to estimate current velocity. While useful, ADCPs have a limited effective range, typically only extending to depths of a few hundred meters. For deep-sea cable deployments, where depths can reach thousands of meters, ADCPs provide incomplete information about the water column conditions affecting the cable's descent.

The limitations of ADCPs in deep-water environments create a significant problem for precise cable placement. Underwater currents, influenced by factors such as tides, winds, and temperature gradients, can significantly deviate a cable from its intended route as it sinks through the water column. This deviation can lead to several undesirable outcomes, including increased cable tension, entanglement with seabed obstacles, and suboptimal positioning that compromises long-term cable integrity. The inability to accurately assess and compensate for these deep-water currents results in increased risk and uncertainty during cable deployment, potentially leading to higher maintenance costs and reduced lifespan of the submarine cable infrastructure.

### SUMMARY

The technology is generally directed to a system for placement of underwater cables by a cable vessel that includes a computer processor configured to generate a three dimensional (3D) model of the cable vessel environment including a spatial representation of a cable being laid by the cable vessel. The computer processor receives inputs including information representative of a selected route for positioning the cable being laid by the cable vessel as well as information representative of properties of the cable vessel. A distributed sensor arrangement detects conditions in a water column where the cable is being laid in real time updating one or more parameters of the 3D model. The updated parameters are provided to the computer processor, which updates the 3D model based on the detected conditions. The distributed sensor arrangement can include a fiber optic cable suspended from the vessel having a distributed acoustic sensing (DAS) system. The DAS system measures micro strains on the fiber optic cable caused by water currents and using software, correlates the measured micro strains to a calculated speed of the water currents. The calculated speed of currents are updated as parameters to the 3D model to generate an updated spatial representation of the cable in the 3D model as the cable descends through the water column. More than one fiber optic cable may be used to determine a direction of the water currents based on the measured micro strains from the fiber optic cables using the distance between the fiber optic cables and correlating the timing of the micro strains from one fiber optic cable to another fiber optic cable.

Alternatively, the distributed sensor arrangement can include a cable having one or more temperature sensors suspended from the cable vessel to measure temperature through the water column. Temperature changes can be associated with water properties such as current movements or changes in water density. As another alternative, the distributed sensor arrangement can include a cable having one or more barometric sensors suspended from the cable vessel for measuring water pressures throughout the water column. The distributed sensor arrangement is configured to detect water column conditions at depths up to and exceeding one kilometer (km).

According to a method for positioning an underwater cable according to a planned cable route, a computer processor is configured to receive information representative of one or more properties of a cable vessel which is laying the underwater cable. The computer processor configured to generate a 3D model of an environment around the cable vessel including a spatial representation of the underwater cable within the environment. The computer processor receives distributed measurements from a water column within the environment, where the distributed measurements represent one or more water conditions in the water column. The computer processor executes instructions that cause the processor to analyze the obtained distributed measurements and derive values representing water conditions within the water column. The derived values are used to update one or more parameters of the 3D model. The distributed measurements may be obtained using a fiber optic cable suspended from the cable vessel. The fiber optic cable can include a distributed acoustic sensing (DAS) system, which measures micro strains on the fiber optic cable caused by the water conditions. The obtained distributed measurements can be analyzed to correlate the measured micro strains to speed of water currents in the water column. Updating one or more parameters of the 3D model includes using the correlated speed of the water currents to generate an updated spatial representation of the underwater cable in the 3D model as the underwater cable descends through the water column. Additional fiber optic cables may be used to take comparative readings at some distance from the first fiber optic cable. The forces measured at the first fiber optic cable can be associated with forces observed at a second fiber optic cable at a different timed to detect direction of water current.

An operator observing the 3D model can make adjustments to cable laying controls of the cable vessel based on the speed and the direction of the water currents in order to maintain positioning according to the planned cable route. The measured water conditions can include any combination of temperature, pressure, and water current velocity at various depths in the water column.

### BRIEF DESCRIPTION OF THE DRAWINGS

FIG. 1 is an illustration of the installation of a submerged communication cable.
FIG. 2 is a cross-sectional view of the fiber optic cable and current.
FIG. 3 is a diagram showing components for generating a three-dimensional model of the cable vessel environment.
FIG. 4 illustrates a method for positioning an underwater cable.
FIG. 5 illustrates components of a computing system for implementing systems and methods according to the described technology.

### DETAILED DESCRIPTION

Distributed acoustic sensing is a technology that enables continuous, real-time measurements along the entire length of a fiber optic cable. Unlike traditional sensors that rely on discrete sensor measurements at pre-determined points, distributed acoustic sensing utilizes the optical fiber. The optical fiber itself acts as the sensing element. These systems allow acoustic signals to be detected over large distances and in harsh environments. The fibers sense vibration as attenuation of a provided optical signal. Using a distributed acoustic sensing schema, micro strains applied to the optical cable by the fluid displacement around the cable are measured.

Characteristic frequencies of the vibrations induced by turbulence vortices around the cable are correlated to the speed of the current. The vibrations measured along the length of the cable are thereby used to identify the speed of currents impinging on the cable. Laminar current flow can be measured along the extent of the cable. In some cases, more than one cable may be used in cooperation with another cable to determine current directions as the flow moves from the area of a first cable toward additional cables.

The identified current speeds and directions are used by systems onboard the vessel for ultimately adjusting cable laying controls to introduce the cable to the water such that the cable settles on the planned cable route on the seabed.

According to an aspect of the disclosure, there is provided a system for underwater cable placement that is able to monitor water column conditions in real-time. The system includes a computer processor that generates a 3D model of the cable vessel environment, including a spatial representation of the cable being laid. The processor receives inputs representing a selected cable route and properties of the cable vessel. A distributed sensor arrangement detects conditions in the water column, updating parameters of the 3D model. Updated parameters are provided to the processor to refine the 3D model based on detected conditions. The system and related method are for placement of underwater cables during deployment to ensure proper positioning.

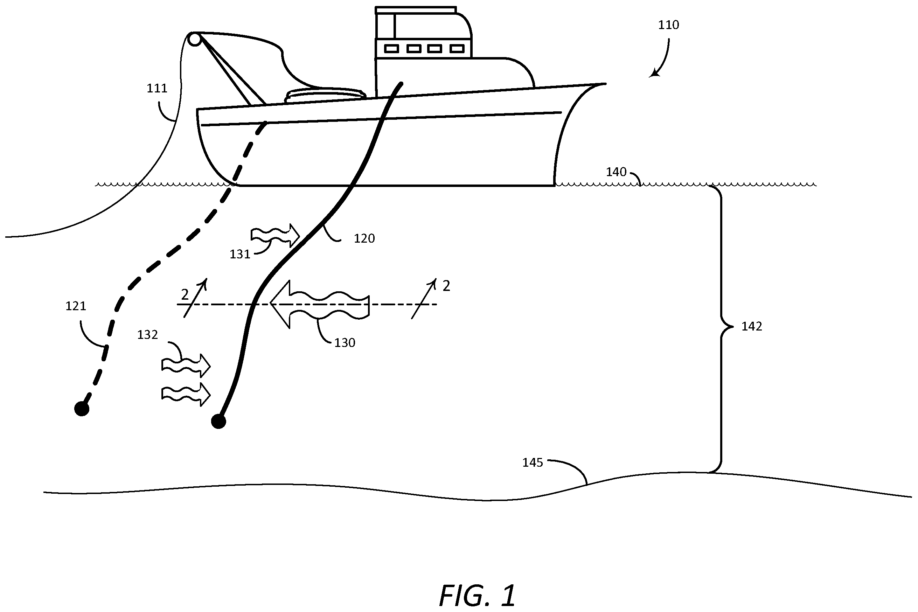

FIG. 1 is an illustration of the installation of a submerged communication cable according to aspects of the described technology. Vessel 110 provides a vehicle that traverses the surface 140 of a body of water, such as the ocean. At any given point, the body or water will have a depth 142 extending from the surface 140 to the seabed 145. With respect to transcontinental subsea cables, the depth 142 of the ocean can average thousands of meters. According to the national oceanic and atmospheric administration (NOAA), the average depth of the world's oceans is about 3,682 meters.

Vessel 110 travels a route across the water's surface 140 that is established by a planned route for the communication cable 111 along the seabed 145. The route is selected to provide protection and efficient placement of the communication cable 111. The communication cable 111 is laid into the water and sinks to the seabed 145. As the communication cable 111 comes to rest, movement of the water may cause the cable to move away from the planned route. Throughout the depth 142 of the water, there may be varying currents at different intermediate depths.

To account for the effects of current on the placement of the communication cable 111, the vessel 110 suspends a fiber optic cable 120 or other cable equipped with distributed sensors, from the vessel 110. Along the length of the fiber optic cable 120 water currents impinge on the fiber optic cable 120. At varying depths, currents of varying speed and force come into contact with the fiber optic cable 120. At a first depth, a current 131 crosses the path of the fiber optic cable 120. At a lower depth, a second current 130 contacts the fiber optic cable 120 from a different direction than current 131. Laminar flows throughout the water column may include additional current flows such as flow 132 occurring near the seabed 145.

As currents 130, 131, 132 contact the fiber optic cable 120, the water flow is diverted around the fiber optic cable 120. Due to forces of fluid flow, the diversion of the water around the fiber optic cable 120, turbulence in the flow occurs. As the water passes the fiber optic cable 120, vortex flows occur at the side of the cable opposite the current flow. These vortexes create vibrations that impact the outer surface of the fiber optic cable 120. The vibrations create micro strains on the fiber optic element in the fiber optic cable 120. Micro strains within the fiber optic cable 120 cause Rayleigh scattering of a light signal placed on the fiber optic cable 120. The light signal is reflected back to its source and attenuation in the light signal provides an indication of the strains applied to the optic element. Through DAS, the physical effect caused by the turbulent fluid flow can be measured and correlated to the current speed.

Vessel 110 may suspend more than one fiber optic cable 121, 120 to take measurements at separate locations in the water column. Multiple fiber optic cables 120, 121 can be used in cooperative fashion to create additional information about subsurface currents 130, 131, 132. By way of non-limiting example, direction of current flow may be inferred from temporal measurement distributions observed between separate fiber optic cables.

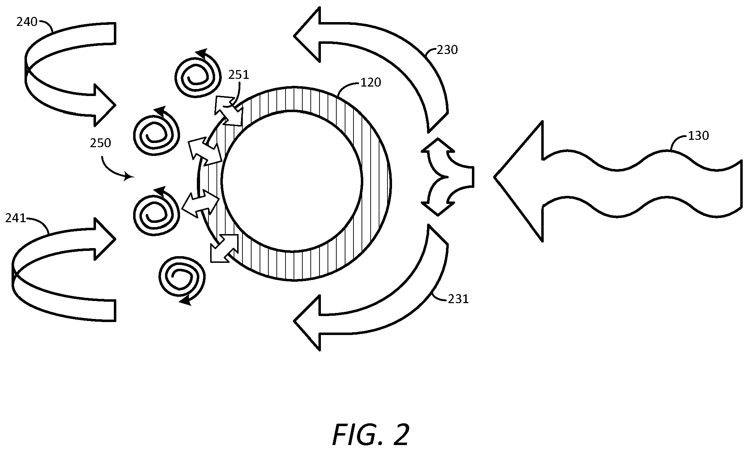

FIG. 2 illustrates a cross-sectional view of the fiber optic cable 120 as it interacts with current 130, as depicted in FIG. 1. The fiber optic cable 120 is shown in cross-section, with the current 130 impinging upon the fiber optic cable 120. As the water flow of the current 130 encounters the fiber optic cable 120, it is diverted around the fiber optic cable 120 to a rightward direction 230 and a leftward direction 231, leading to complex fluid dynamics around the cable. Upon passing the fiber optic cable 120, the rightward flow 230 and leftward flow 231 decrease in speed and flow back around in a direction of the rear side of the fiber optic cable 120 as shown in arrows 240 and 241, respectively. As the returning flow comes back into contact with the fiber optic cable 120, the diverted flow results in the formation of vortices 250 at the wall of the fiber optic cable 120. These vortices 250 induce forces on the fiber optic cable 120, causing it to vibrate 251. The primary current flow 130 is shown impinging directly on the fiber optic cable 120, causing the initial displacement and setting the stage for the vortex formation and subsequent vibrations. The magnitude and frequency of these vibrations are directly related to the speed of the current 130. By measuring these vibrations using distributed acoustic sensing, the current speed can be accurately determined.

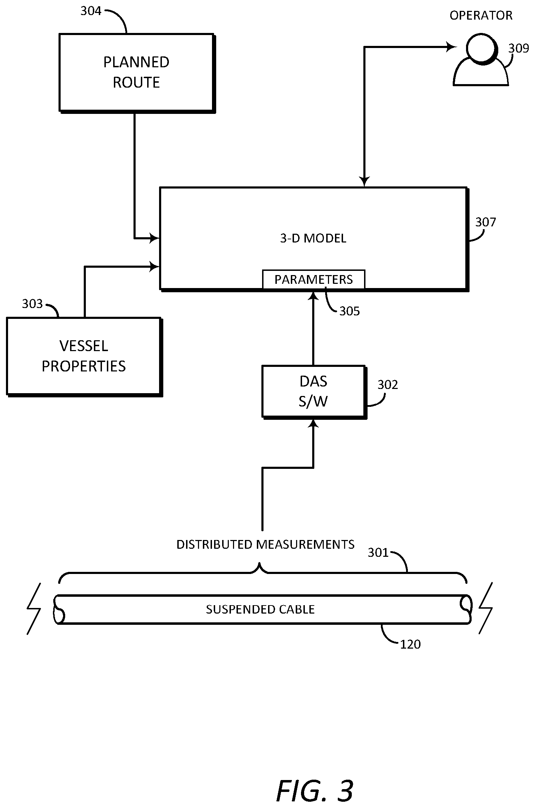

FIG. 3 presents a diagram depicting components for generating a three-dimensional model of the cable vessel environment. During placement of an underwater cable, a computer processor on board the vessel is programmed to generate a three dimensional model of the environment around the vessel, including a spatial representation of the cable as it is placed in the water. The processor uses information including the predetermined planned cable route as well and vessel properties, such as location, direction, speed and the like. Based on the input information, the processor generates the 3D model and displays the model to an operator 309 onboard the vessel. A suspended cable 120 is shown, representing the physical cable deployed in the water column. Distributed measurements 301 are taken along the suspended cable 120. These distributed measurements 301 are fed into a software module 302 for analysis for example, distributed acoustic sensing software. The software module 302 processes the distributed measurements 301 collected from the suspended cable 120. Information regarding vessel properties 303, along with information about a planned route 304, serve as inputs to a 3D model 307 generated by a computer processor on board the vessel. The 3D model 307 may include stored data relating to properties of the vessel 306. Within the 3-D model 307 are stored parameters 305 representative of the modeled environment. The software module 302 also provides inputs to the 3D model 307 in the form of parameters 305. Parameters 305 may represent the measurements 301 captured along the suspended cable 120. Sensors disposed along the length of the suspended cable may measure characteristics of the water column, including but not limited to depth, magnitude and direction of the current at the sensor location. The characteristics measured at each of the sensor locations along the distributed cable 120 are combined as a set of parameters that serve as input to the 3D model generater. The 3D model 307 visually represents the cable vessel environment, including the spatial positioning of the cable. An operator 309 can interact with the 3D model 307 to monitor and adjust cable-laying operations based on the information provided by the 3D model 307.

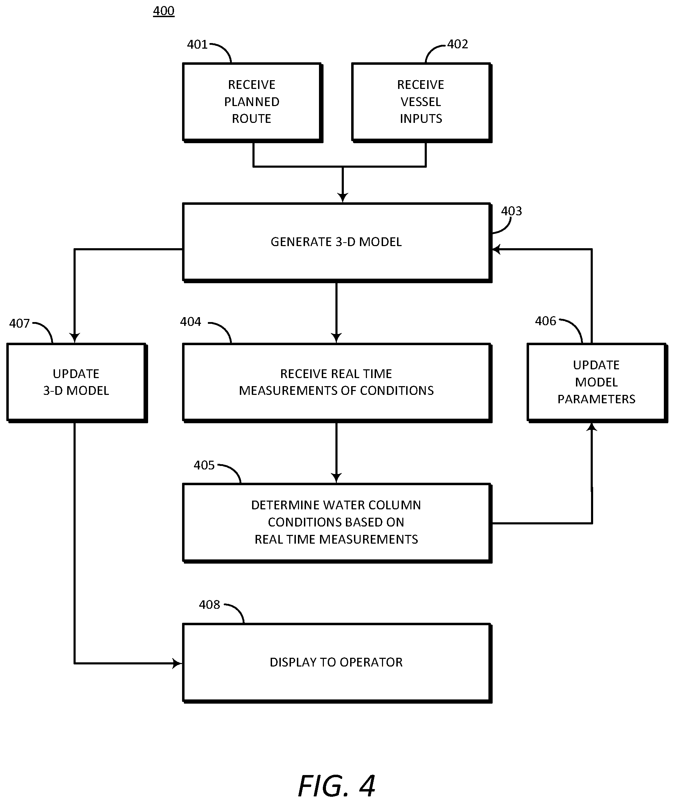

FIG. 4 presents a method 400 for positioning an underwater cable along a planned route according to the described technology. The process starts with block 401, where information representative of a planned route is received. This information may include geographical coordinates, depth profiles, and any predetermined constraints or obstacles along the route. Simultaneously, block 402 represents the process of receiving information representative of properties of a cable vessel. This may encompass vessel speed, heading, cable payout rate, and other relevant operational parameters. Based on the information received, at block 403 a computer processor on the vessel generates a three-dimensional (3D) model of the environment surrounding the cable vessel. This 3D model incorporates a spatial representation of the underwater cable, the cable vessel, and the surrounding water column. At block 404 real-time measurements of conditions within the water column are captured. These measurements are obtained from a distributed sensor arrangement, such as a fiber optic cable with distributed acoustic sensing capabilities or through suspended cables equipped with other types of sensors. Block 405 involves determining water column conditions based on the measurements obtained. These conditions can include water current speed and direction at various depths, temperature gradients, and salinity levels. These conditions can be correlated to a spatial representation of these conditions within the water column. The determined water column conditions are then used in block 406 to update parameters of the 3D model 403. These parameters may include cable sag, cable position deviation due to currents, and stress distribution along the cable. The updated parameters are subsequently used at block 407 to update the 3D model, providing a refined representation of the cable vessel environment and the underwater cable's spatial positioning. Finally, at block 408 the updated 3D model 403 is displayed to an operator of the cable vessel. The operator can then use this information to make informed decisions regarding cable laying controls, ensuring accurate positioning according to the planned cable route.

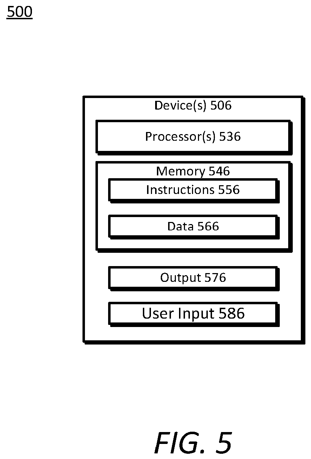

Figure 5 illustrates an example system 500 in which the features described above may be implemented. It should not be considered limiting the scope of the disclosure or usefulness of the features described herein. In this example, system 500 may include device(s) 506, and storage system 540, among other components such as a network or servers which are in communication with devices 506.

Each device 506 may be a personal computing device intended for use by a respective user. The device 506 may include one or more processors 536, memory 546, data 566 and instructions 556. Each device 506 may also include an output 576, user input 586, and location sensor 596. By way of example only, devices 506 may be mobile phones or devices such as a wireless-enabled PDA, smartphones, a tablet PC, a wearable computing device (e.g., a smartwatch, AR/VR headset, smart helmet, etc.), a netbook that is capable of obtaining information via the Internet or other networks, or a smart home device, such as a home assistant, smart thermostat, smart doorbell, smart light, etc.

Device 506 may be configured as a cable placement modeler for use on a cable vessel. Device 506 may receive inputs from sources such as a pre-planned cable route, vessel properties such as direction and speed, and other information relating to conditions in the water column, such as information received from a distributed group of sensors. The group of sensors may be disposed along a cable that is suspended from the vessel. For example, a distributed acoustic sensing apparatus may include a fiber optic cable suspended from the ship. Water currents in the water column interact with the optical cable. Turbulence in water flow around the fiber optic cable produces vibrations at the optical cable. The vibrations provide measurements that can be correlated to the speed of the water current at the fiber optic cable. Device 506 may store instructions 556 including instructions for receiving the vibration data from the fiber optic cable and correlating that information into water velocity.

Instructions 556 may further process the inputs to produce a 3D model of the environment around the vessel including a spatial representation of an underwater cable as the underwater cable is being laid. Information from the distributed sensors may provide information about the water conditions in the water column in real time. As the information from the distributed sensors is updated, parameters for generating the 3D model are updated with the new information and the 3D model is regenerated to reflect the updated information. The 3D model can provide an indication of the effect of water conditions on the planned cable route and allow the operator to adjust the vessels cable laying systems to account for unanticipated conditions that could affect the precise placement of the cable.

Memory 546 of device 506 may store information that is accessible by processor 536. Memory 546 may also include data that can be retrieved, manipulated or stored by the processor 536. The memory 546 may be of any non-transitory type capable of storing information accessible by the processor 536, including a non-transitory computer-readable medium, or other medium that stores data that may be read with the aid of an electronic device, such as a hard-drive, memory card, read-only memory ("ROM"), random access memory ("RAM"), optical disks, as well as other write-capable and read-only memories. Memory 546 may store information that is accessible by the processors 536, including instructions 556 that may be executed by processors 536, and data 566.

Data 566 may be retrieved, stored or modified by processors 536 in accordance with instructions 556. For instance, although the present disclosure is not limited by a particular data structure, the data 566 may be stored in computer registers, in a relational database as a table having a plurality of different fields and records, XML documents, or flat files. The data 566 may also be formatted in a computer-readable format such as, but not limited to, binary values, ASCII or Unicode. By further way of example only, the data 566 may comprise information sufficient to identify the relevant information, such as numbers, descriptive text, proprietary codes, pointers, references to data stored in other memories (including other network locations) or information that is used by a function to calculate the relevant data.

The instructions 556 can be any set of instructions to be executed directly, such as machine code, or indirectly, such as scripts, by the processor 536. In that regard, the terms "instructions," "application," "steps," and "programs" can be used interchangeably herein. The instructions can be stored in object code format for direct processing by the processor, or in any other computing device language including scripts or collections of independent source code modules that are interpreted on demand or compiled in advance. Functions, methods and routines of the instructions are explained in more detail below.

The one or more processors 536 may include any conventional processors, such as a commercially available CPU or microprocessor. Alternatively, the processor can be a dedicated component such as an ASIC or other hardware-based processor. Although not necessary, computing devices 506 may include specialized hardware components to perform specific computing functions faster or more efficiently.

Although Figure 5 functionally illustrates the processor, memory, and other elements of devices 506 as being within the same respective blocks, it will be understood by those of ordinary skill in the art that the processor or memory may actually include multiple processors or memories that may or may not be stored within the same physical housing. Similarly, the memory may be a hard drive or other storage media located in a housing different from that of the devices 506. Accordingly, references to a processor or device will be understood to include references to a collection of processors, devices, or memories that may or may not operate in parallel.

Output 576 may be a display, such as a monitor having a screen, a touchscreen, a projector, or a television. The display 576 of the one or more computing devices 506 may electronically display information to a user via a graphical user interface ("GUI") or other types of user interfaces. For example, as will be discussed below, display 576 may electronically display query results.

The user input 586 may be a mouse, keyboard, touch-screen, microphone, or any other type of input.

As other examples of potential services provided by a platform implementing the environment, the server computing device can maintain a variety of models in accordance with different constraints available at the data center. For example, the server computing device can maintain different families for deploying models on various types of TPUs and/or GPUs housed in the data center or otherwise available for processing.

Aspects of this disclosure can be implemented in digital electronic circuitry, in tangibly embodied computer software or firmware, and/or in computer hardware, such as the structure disclosed herein, their structural equivalents, or combinations thereof. Aspects of this disclosure can further be implemented as one or more computer programs, such as one or more modules of computer program instructions encoded on a tangible non-transitory computer storage medium for execution by, or to control the operation of, one or more data processing apparatus. The computer storage medium can be a machine-readable storage device, a machine-readable storage substrate, a random or serial access memory device, or combinations thereof. The computer program instructions can be encoded on an artificially generated propagated signal, such as a machine-generated electrical, optical, or electromagnetic signal, that is generated to encode information for transmission to suitable receiver apparatus for execution by a data processing apparatus.

The term "configured" is used herein in connection with systems and computer program components. For a system of one or more computers to be configured to perform particular operations or actions means that the system has installed on its software, firmware, hardware, or a combination thereof that cause the system to perform the operations or actions. For one or more computer programs to be configured to perform particular operations or actions means that the one or more programs include instructions that, when executed by one or more data processing apparatus, cause the apparatus to perform the operations or actions.

The term "data processing apparatus" refers to data processing hardware and encompasses various apparatus, devices, and machines for processing data, including programmable processors, a computer, or combinations thereof. The data processing apparatus can include special purpose logic circuitry, such as a field programmable gate array (FPGA) or an application specific integrated circuit (ASIC). The data processing apparatus can include code that creates an execution environment for computer programs, such as code that constitutes processor firmware, a protocol stack, a database management system, an operating system, or combinations thereof.

The data processing apparatus can include special-purpose hardware accelerator units for implementing machine learning models to process common and compute-intensive parts of machine learning training or production, such as inference or workloads. Machine learning models can be implemented and deployed using one or more machine learning frameworks.

The term "computer program" refers to a program, software, a software application, an app, a module, a software module, a script, or code. The computer program can be written in any form of programming language, including compiled, interpreted, declarative, or procedural languages, or combinations thereof. The computer program can be deployed in any form, including as a stand-alone program or as a module, component, subroutine, or other unit suitable for use in a computing environment. The computer program can correspond to a file in a file system and can be stored in a portion of a file that holds other programs or data, such as one or more scripts stored in a markup language document, in a single file dedicated to the program in question, or in multiple coordinated files, such as files that store one or more modules, sub programs, or portions of code. The computer program can be executed on one computer or on multiple computers that are located at one site or distributed across multiple sites and interconnected by a data communication network.

The term "database" refers to any collection of data. The data can be unstructured or structured in any manner. The data can be stored on one or more storage devices in one or more locations. For example, an index database can include multiple collections of data, each of which may be organized and accessed differently.

The term "engine" refers to a software-based system, subsystem, or process that is programmed to perform one or more specific functions. The engine can be implemented as one or more software modules or components or can be installed on one or more computers in one or more locations. A particular engine can have one or more computers dedicated thereto, or multiple engines can be installed and running on the same computer or computers.

The processes and logic flows described herein can be performed by one or more computers executing one or more computer programs to perform functions by operating on input data and generating output data. The processes and logic flows can also be performed by special purpose logic circuitry, or by a combination of special purpose logic circuitry and one or more computers.

A computer or special purposes logic circuitry executing the one or more computer programs can include a central processing unit, including general or special purpose microprocessors, for performing or executing instructions and one or more memory devices for storing the instructions and data. The central processing unit can receive instructions and data from the one or more memory devices, such as read only memory, random access memory, or combinations thereof, and can perform or execute the instructions. The computer or special purpose logic circuitry can also include, or be operatively coupled to, one or more storage devices for storing data, such as magnetic, magneto optical disks, or optical disks, for receiving data from or transferring data to. The computer or special purpose logic circuitry can be embedded in another device, such as a mobile phone, a personal digital assistant (PDA), a mobile audio or video player, a game console, a Global Positioning System (GPS), or a portable storage device, e.g., a universal serial bus (USB) flash drive, as examples.

Computer readable media suitable for storing the one or more computer programs can include any form of volatile or non-volatile memory, media, or memory devices. Examples include semiconductor memory devices, e.g., EPROM, EEPROM, or flash memory devices, magnetic disks, e.g., internal hard disks or removable disks, magneto optical disks, CD-ROM disks, DVD-ROM disks, or combinations thereof.

Aspects of the disclosure can be implemented in a computing system that includes a back end component, e.g., as a data server, a middleware component, e.g., an application server, or a front end component, e.g., a client computer having a graphical user interface, a web browser, or an app, or any combination thereof. The components of the system can be interconnected by any form or medium of digital data communication, such as a communication network. Examples of communication networks include a local area network (LAN) and a wide area network (WAN), e.g., the Internet.

The computing system can include clients and servers. A client and server can be remote from each other and interact through a communication network. The relationship of client and server arises by virtue of the computer programs running on the respective computers and having a client-server relationship to each other. For example, a server can transmit data, e.g., an HTML page, to a client device, e.g., for purposes of displaying data to and receiving user input from a user interacting with the client device. Data generated at the client device, e.g., a result of the user interaction, can be received at the server from the client device.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the examples should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible implementations. Further, the same reference numbers in different drawings can identify the same or similar elements.

## Claims

1. A system for placement of underwater cables by a cable vessel comprising:
a computer processor configured to generate a three dimensional (3D) model of the cable vessel environment including a spatial representation of a cable being laid by the cable vessel;
a first input to the computer processor providing information representative of a selected route for positioning the cable being laid by the cable vessel;
a second input the computer processor providing information representative of properties of the cable vessel, and
a distributed sensor arrangement, the distributed sensor arrangement configured to detect conditions in a water column where the cable is being laid in real time, and update one or more parameters of the 3D model and provide the updated parameters to the computer processor to update the 3D model based on the detected conditions.

2. The system of claim 1, wherein the distributed sensor arrangement includes a fiber optic cable suspended from the cable vessel.

3. The system of claim 2, wherein the fiber optic cable includes a distributed acoustic sensing (DAS) system.

4. The system of claim 3, wherein the DAS system is configured to measure micro strains on the fiber optic cable caused by water currents.

5. The system of claim 4, wherein the computer processor is further configured to correlate the measured micro strains to a speed of the water currents.

6. The system of claim 5, wherein the updated parameters of the 3D model include the correlated speed of the water currents to generate a spatial representation of the cable in the 3D model as the cable descends through the water column.

7. The system of claim 5, wherein the computer processor is further configured to determine a direction of the water currents based on the measured micro strains from a plurality of fiber optic cables suspended from the cable vessel.

8. The system of one of claims 1 to 7, wherein the distributed sensor arrangement includes a cable comprising one or more temperature sensors, the cable suspended from the cable vessel; and/or
wherein the distributed sensor arrangement includes a cable comprising one or more barometric sensors, the cable suspended from the cable vessel; and/or
wherein the distributed sensor arrangement is configured to detect water column conditions at depths up to 8000 meters.

9. A method for positioning an underwater cable according to a planned cable route comprising:
receiving information representative of one or more properties of a cable vessel which is laying the underwater cable;
in a computer processor, generating a three dimensional (3D) model of the environment around the cable vessel including a spatial representation of the underwater cable within the environment;
obtaining distributed measurements from a water column within the environment, the distributed measurements representing one or more water conditions in the water column;
in a computer processor, analyzing the obtained distributed measurements to derive values representing water conditions within the water column; and
updating one or more parameters of the 3D model based on the derived values.

10. The method of claim 9, wherein the distributed measurements are obtained using a fiber optic cable suspended from the cable vessel.

11. The method of claim 10, wherein the fiber optic cable comprises a distributed acoustic sensing (DAS) system.

12. The method of claim 11, wherein the DAS system measures micro strains on the fiber optic cable caused by the water conditions.

13. The method of claim 12, wherein analyzing the obtained distributed measurements includes correlating the measured micro strains to a speed of water currents in the water column; and
wherein updating one or more parameters of the 3D model optionally includes the correlated speed of the water currents and generating a spatial representation of the underwater cable in the 3D model as the underwater cable descends through the water column.

14. The method of claim 13, further comprising determining a direction of the water currents based on the measured micro strains from a plurality of fiber optic cables suspended from the cable vessel; and
optionally further comprising adjusting cable laying controls of the cable vessel based on the speed and the direction of the water currents to maintain positioning according to the planned cable route.

15. The method of one of claims 9 to 14, further comprising displaying the updated 3D model to an operator of the cable vessel; and/or
wherein the water conditions include any combination of temperature, pressure, and water current velocity at various depths in the water column.
